# EUROPEAN PATENT APPLICATION

(11) **EP 4 442 658 A1**
(43) Date of publication of application: **09.10.2024**
(21) Application number: 22898459.7
(22) Date of filing: 15.11.2022
(51) Int. Cl.: C03C 3/15, C03C 3/062, C03C 3/068, C03C 3/16, C03C 3/17, C03C 3/19, C03C 4/00, G02B 27/28

(54) **GLASS MATERIAL AND MAGNETO-OPTIC ELEMENT**

(30) Priority: 29.11.2021 JP 2021193035
(71) Applicant: Nippon Electric Glass Co., Ltd., Otsu-shi, Shiga 520-8639 (JP)
(72) Inventor: SUZUKI, Futoshi, Otsu-shi Shiga 520-8639 (JP)
(74) Representative: Hoffmann Eitle
(86) International application number: PCT/JP2022/042386
(87) International publication number: WO 2023/095675

(57) **Abstract**

To provide a glass material and a magnetic optical element with a reduced thermal lens effect. A glass material contains, in mol%, from 10% to 90% of Tb₂O₃, from 1% to 89% of B₂O₃+Al₂O₃+SiO₂+P₂O₅, and from 0.01 ppm to 100 ppm of FeO+Fe₂O₃, and further contains, as an external proportion, from 0.001% to 1% of CeO₂.

## Description

### TECHNICAL FIELD

The present invention relates to a glass material and a magnetic optical element.

### BACKGROUND ART

Paramagnetic glass materials are known to exhibit the Faraday effect, which is one of magnetic optical effects. The Faraday effect is an effect that rotates linearly polarized light passing through a material placed in a magnetic field. Magnetic optical elements (for example, a Faraday rotator) that use this effect are used in magnetic optical devices such as an optical isolator.

As the paramagnetic glass materials, for example, a SiO₂-B₂O₃-Al₂O₃-Tb₂O₃-based material (Patent Literature 1) and a P₂O₅-B₂O₃-Tb₂O₃-based material (Patent Literature 2) are known.

### CITATION LIST

### PATENT LITERATURE

Patent Literature 1: JPS51-46524B
Patent Literature 2: JPS52-32881B

### SUMMARY OF INVENTION

### TECHNICAL PROBLEM

In recent years, the output of laser light emitted to the magnetic optical devices has increased. When the output of the laser light increases, the temperature of a magnetic optical element increases, and a beam diameter change is likely to occur due to a thermal lens effect.

In view of the above, an object of the present invention is to provide a glass material and a magnetic optical element with a reduced thermal lens effect.

### SOLUTION TO PROBLEM

A glass material according to the present invention contains, in mol%, from 10% to 90% of Tb₂O₃, from 1% to 89% of B₂O₃+Al₂O₃+SiO₂+P₂O₅, and from 0.01 ppm to 100 ppm of FeO+Fe₂O₃, and further contains, as an external proportion, from 0.001% to 1% of CeO₂.

It is preferable that the glass material according to the present invention contains, in mol%, from 0% to 70% of B₂O₃, from 0% to 70% of Al₂O₃, from 0% to 70% of SiO₂, and from 0% to 10% of P₂O₅.

It is preferable that the glass material according to the present invention contains, in mol%, more than 12% to 40% of B₂O₃, from 1% to 20% of Al₂O₃, from 0% to 40% of SiO₂, and from 0% to 5% of P₂O₅.

It is preferable that the glass material according to the present invention contains, in mol%, less than 5% of Pr₂O₃, and less than 5% of Dy₂O₃.

It is preferable that, in the glass material according to the present invention, a proportion of Tb³⁺ to total Tb is 55% or more in mol%.

It is preferable that, in the glass material according to the present invention, a light transmittance is 70% or more at a wavelength of 1064 nm.

A magnetic optical element according to the present invention contains the above glass material.

### ADVANTAGEOUS EFFECTS OF INVENTION

According to the present invention, it is possible to provide a glass material and a magnetic optical element with a reduced thermal lens effect.

### BRIEF DESCRIPTION OF DRAWING

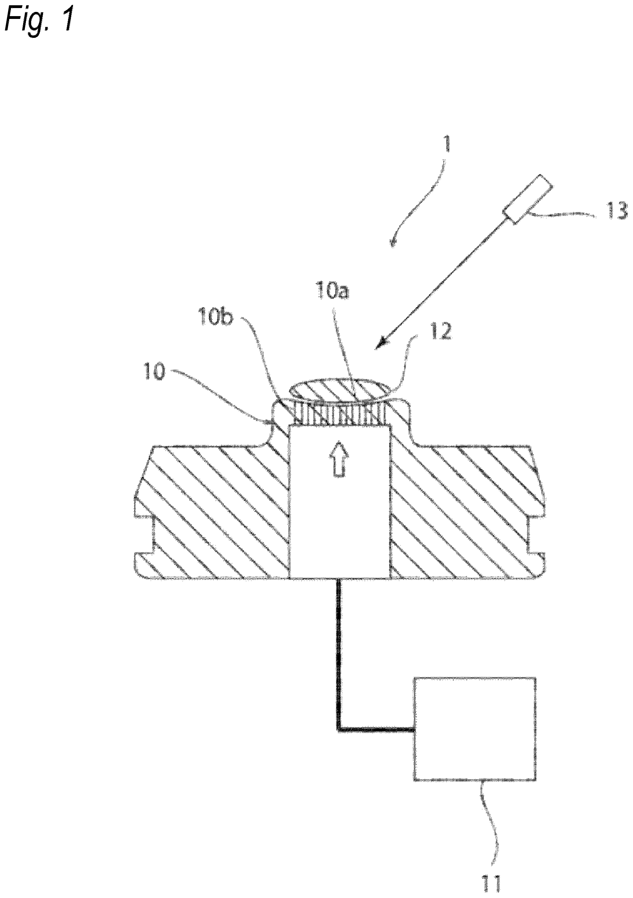

Fig. 1 is a schematic cross-sectional view showing one embodiment of an apparatus for manufacturing a glass material according to the present invention.

### DESCRIPTION OF EMBODIMENTS

A glass material according to the present invention contains, in mol%, from 10% to 90% of Tb₂O₃, from 1% to 89% of B₂O₃+Al₂O₃+SiO₂+P₂O₅, and from 0.01 ppm to 100 ppm of FeO+Fe₂O₃, and further contains, as an external proportion, from 0.001% to 1% of CeO₂. Here, the expression "further contains, as an external proportion, from 0.001% to 1% of CeO₂" means that the content of CeO₂ is from 0.001% to 1% with respect to 100% of the total content of components other than CeO₂ in mol% (that is, the total amount is 100.001% to 101%).

The reason why the glass composition is defined in the above way and the content of each component will be described below. Note that, in the following description, "%" means "mol%" unless otherwise specified. In addition, "a visible to near-infrared wavelength range" in the following description is a wavelength range used for visible to near-infrared lasers, and unless otherwise specified, means a wavelength range of 300 nm to 2000 nm, particularly 300 nm to 1100 nm.

Tb₂O₃ is a component that increases the absolute value of the Verdet constant and that enhances the Faraday effect. The content of Tb₂O₃ is from 10% to 90%, and is preferably from 10% to 80%, from 10% to 70%, from 10% to 60%, from 12% to 50%, from 12% to 51%, from 15% to 49%, from 16% to 46%, from 18% to 45%, from 20% to 44%, from 21% to 43%, from 22% to 41%, and particularly preferably from 26% to 40%. Note that, when it is desired to particularly increase the Verdet constant, the content of Tb₂0₃ is preferably from 52% to 80%, from 53% to 75%, from 54% to 71%, from 55% to 69%, from 56% to 67%, from 57% to 65%, and particularly preferably from 58% to 64%. When the content of Tb₂O₃ is too small, it becomes difficult to obtain the above effects. When the content of Tb₂O₃ is too large, the vitrification is more difficult. In addition, the light transmittance of the glass material tends to decrease. Therefore, when it is desired to particularly increase the Verdet constant, it is preferable to limit the content of Tb₂O₃ as described above and to contain 1% or more of Al₂O₃. Accordingly, devitrification of the glass material is prevented and the vitrification becomes easy. Note that, Tb is present in the glass in a trivalent or tetravalent state, and in the present invention, all of these are expressed as Tb₂O₃.

The proportion of Tb³⁺ to total Tb is preferably 55% or more, 60% or more, 70% or more, 80% or more, and particularly preferably 90% or more in mol%. Accordingly, the proportion of Tb⁴⁺ to the total Tb can be reduced. Tb⁴⁺ has absorption in the wavelength range of 300 nm to 1100 nm, and the light transmittance of the glass material tends to decrease. Therefore, when the proportion of Tb³⁺ to the total Tb is set to the above value, absorption of laser light in the visible to near-infrared wavelength range is prevented, and heat generation of the glass material is easily prevented. Therefore, the thermal lens effect is easily prevented.

FeO and Fe₂O₃ are components that reduce the light transmittance in the visible to near-infrared wavelength range and that tend to cause a thermal lens effect. Specifically, FeO (Fe²⁺) has broad absorption with a peak around a wavelength of 1200 nm. Therefore, the glass material absorbs laser light in the visible to near-infrared wavelength range and generates heat, which tends to cause a thermal lens effect. In addition, Fe₂O₃ (Fe³⁺) may be reduced to FeO during the melting process. Therefore, in the glass material according to the present invention, the content of FeO+Fe₂O₃ (total amount of FeO and Fe₂O₃) is from 0.01 ppm to 100 ppm, and is preferably from 0.01 ppm to 20 ppm, from 0.05 ppm to 15 ppm, from 0.1 ppm to 14 ppm, from 0.2 ppm to 13 ppm, from 0.3 ppm to 11 ppm, from 0.4 ppm to 10 ppm, from 0.5 ppm to 9 ppm, from and particularly preferably from 1 ppm to 8 ppm. Note that, when the content of FeO+Fe₂O₃ is too small, the manufacturing cost tends to increase.

CeO₂ is a component that functions as an oxidizing agent. The content (addition amount) of CeO₂ is, as an external proportion, from 0.001% to 1%, and is preferably from 0.01% to 0.9%, from 0.02% to 0.8%, from 0.04% to 0.7%, from 0.04% to 0.5%, and particularly preferably from 0.04% to 0.4%. When the addition amount of CeO₂ is too small, the effect of oxidizing Fe²⁺ contained in the glass to Fe³⁺ is reduced. When the addition amount of CeO₂ is too large, the light transmittance of the glass material tends to decrease rather.

In this way, the glass material according to the present invention contains FeO and Fe₂O₃, which tend to reduce the light transmittance and cause a thermal lens effect, and CeO₂, which functions as an oxidizing agent, as essential components. With this configuration, it is possible to prevent a decrease in light transmittance of the glass material in the visible to near-infrared wavelength range and to reduce laser light absorption. Therefore, the glass material according to the present invention can have a reduced thermal lens effect.

The ratio CeO₂/(FeO+Fe₂O₃) of the content (addition amount) of CeO₂ to the content of FeO+Fe₂O₃ is preferably from 10 to 10000, from 30 to 10000, from 100 to 7500, from 100 to 5000, and particularly preferably from 100 to 3000. When the content (addition amount) of CeO₂ and the content of FeO+Fe₂O₃ satisfy the above ratio, the thermal lens effect is easily prevented.

B₂O₃, Al₂O₃, SiO₂, and P₂O₅ are components that form a glass network and that expand the vitrification range and stabilize the vitrification. The content of B₂O₃+Al₂O₃+SiO₂+P₂O₅ (total amount of B₂O₃, Al₂O₃, SiO₂, and P₂O₅) is from 1% to 89%, and is preferably from 1% to 86%, from 6% to 85%, from 11% to 83%, from 16% to 81%, from 21% to 79%, from 26% to 77%, from 31% to 75%, from 36% to 73%, from 41% to 71%, from 46% to 70%, and from 47% to 69%. When the content of B₂O₃+Al₂O₃+SiO₂+P₂O₅ is too small, the vitrification becomes difficult. When the content of B₂O₃+Al₂O₃+SiO₂+P₂O₅ is too large, it becomes difficult to obtain a sufficient Faraday effect. Note that, the preferred range of each component is as follows.

The content of B₂O₃ is preferably from 0% to 89%, from 0% to 88%, from 0% to 87%, from 0% to 85%, from 0% to 75%, from 0% to 70%, from 0% to 66%, from 0% to 56%, from 0% to 51%, from 1% to 44%, from 1% to 40%, from 1% to 40%, from 2% to 40%, from 4% to 40%, from 5% to 40%, from 10% to 40%, more than 12% to 40%, and particularly preferably from 13% to 40%.

The content of Al₂O₃ is preferably from 0% to 89%, from 0% to 88%, from 0% to 87%, from 0% to 85%, from 0% to 75%, from 0% to 70%, from 0% to 66%, from 0% to 56%, from 0% to 51%, from 1% to 44%, from 1% to 40%, from 1% to 30%, and particularly preferably from 1% to 20%.

The content of SiO₂ is preferably from 0% to 89%, from 0% to 88%, from 0% to 87%, from 0% to 85%, from 0% to 75%, from 0% to 70%, from 0% to 66%, from 0% to 56%, from 0% to 51%, from 0% to 50%, from 0% to 49%, from 0% to 40%, from 1% to 40%, from 5% to 40%, and particularly preferably from 10% to 40%.

The content of P₂O₅ is preferably from 0% to 89%, from 0% to 88%, from 0% to 87%, from 0% to 85%, from 0% to 75%, from 0% to 70%, from 0% to 66%, from 0% to 56%, from 0% to 51%, from 0% to 40%, from 0% to 30%, from 0% to 25%, from 0% to 20%, from 0% to 20%, from 0% to 15%, from 0% to 10%, from 0% to 5%, and particularly preferably from 1% to 5%.

The glass material according to the present invention can contain the following components in addition to the above components.

GeO₂ is a component that forms a glass network and that expands the vitrification range and stabilizes the vitrification. The content of GeO₂ is preferably from 0% to 60%, from 0% to 55%, from 0% to 50%, from 0% to 45%, from 0% to 40%, and particularly preferably from 0% to 35%. When the content of GeO₂ is too large, it becomes difficult to obtain a sufficient Faraday effect.

ZnO is a component that stabilizes the vitrification. The content of ZnO is preferably from 0% to 20%, from 0% to 15%, from 0% to 13%, from 0 to 10%, from 0 to 8%, and particularly preferably from 0% to 5%. When the content of ZnO is too large, the devitrification is likely to occur. In addition, it becomes difficult to obtain a sufficient Faraday effect.

La₂O₃, Gd₂O₃, Y₂O₃, and Yb₂O₃ are components that stabilize the vitrification. Therefore, each of the contents of La₂O₃, Gd₂O₃, Y₂O₃, and Yb₂O₃ is preferably 10% or less, 7% or less, 5% or less, 4% or less, 2% or less, and particularly preferably 1% or less. When the content of these components is too large, the vitrification is more difficult rather. The lower limit of each of the contents of La₂O₃, Gd₂O₃, Y₂O₃, and Yb₂O₃ is not particularly limited, and is, for example, 0.1% or more.

Dy₂O₃, Eu₂O₃, Pr₂O₃, and Sm₂O₃ have light absorption in the visible to near-infrared wavelength range. Therefore, each of the contents of Dy₂O₃, Eu₂O₃, Pr₂O₃, and Sm₂O₃ is preferably less than 5%, 3% or less, 2% or less, 1% or less, 500 ppm or less, and particularly preferably 100 ppm or less. When the content of these components is too large, the light transmittance in the visible to near-infrared wavelength range tends to decrease. Note that, Dy, Eu, Pr, and Sm present in the glass are present in divalent, trivalent, and tetravalent states, and in the present invention, these are expressed as Dy₂O₃, Eu₂O₃, Pr₂O₃, and Sm₂O₃, respectively. The lower limit of each of the contents of Dy₂O₃, Eu₂O₃, Pr₂O₃, and Sm₂O₃ is not particularly limited, and is, for example, 0.001 ppm or more.

MgO, CaO, SrO, and BaO are components that stabilize the vitrification and that easily improve the chemical durability. Each of the contents of MgO, CaO, SrO, and BaO is preferably from 0% to 10%, and particularly preferably from 0% to 5%. When the content of these components is too large, it becomes difficult to obtain a sufficient Faraday effect.

Ga₂O₃ is a component that stabilizes the vitrification and that easily expands the vitrification range. The content of Ga₂O₃ is preferably from 0% to 6%, from 0% to 5%, from 0% to 4%, and particularly preferably from 0% to 2%. When the content of Ga₂O₃ is too large, the devitrification is likely to occur. In addition, it becomes difficult to obtain a sufficient Faraday effect.

Fluorine is a component that increases the glass-forming ability and that easily expands the vitrification range. The content of fluorine (in terms of F₂) is preferably from 0% to 10%, from 0% to 7%, from 0% to 5%, from 0% to 3%, from 0% to 2%, and particularly preferably from 0% to 1%. When the content of fluorine is too large, there is a risk that the components volatilize during melting and adversely influences the vitrification. In addition, striae are more likely to occur.

The glass material preferably has a light transmittance of 70% or more, 75% or more, 80% or more, and particularly 83% or more at a wavelength of 1064 nm. In addition, the light transmittance is preferably 60% or more, 65% or more, 70% or more, and particularly preferably 75% or more at a wavelength of 633 nm. Further, the light transmittance is preferably 30% or more, 50% or more, 60% or more, and particularly preferably 70% or more at a wavelength of 532 nm. Note that, the above light transmittance is a value when the thickness of the glass material is 1 mm.

When the glass material according to the present invention has the above configuration, the thermal lens effect is reduced. Therefore, the glass material according to the present invention can be suitably used for magnetic optical elements (for example, a Faraday rotator) that constitute a magnetic device such as an optical isolator, an optical circulator, and a magnetic sensor.

The glass material according to the present invention can be prepared, for example, by a container-free floating method. Fig. 1 is a schematic cross-sectional view showing one embodiment of an apparatus for manufacturing the glass material according to the present invention. Hereinafter, a method for manufacturing the glass material according to the present invention will be described with reference to Fig. 1.

A glass material manufacturing apparatus 1 include a forming die 10. The forming die 10 also serves as a melting container. The forming die 10 has a forming surface 10a and a plurality of gas ejection holes 10b open to the forming surface 10a. The gas ejection holes 10b are connected to a gas supply mechanism 11 such as a gas cylinder. A gas is supplied from this gas supply mechanism 11 to the forming surface 10a via the gas ejection holes 10b. The type of the gas is not particularly limited, and for example, it may be air or oxygen, or a reducing gas containing a nitrogen gas, an argon gas, a helium gas, a carbon monoxide gas, a carbon dioxide gas, or hydrogen. Among these, it is preferable to use an inert gas from the viewpoint of preventing oxidation of the glass material and ensuring safety.

Using the glass material manufacturing apparatus 1, the glass material can be manufactured as follows. First, a glass raw material lump 12 is placed on the forming surface 10a. The glass raw material lump 12 is, for example, one obtained by integrating a raw material powder by press molding or the like, a sintered body obtained by integrating a raw material powder by press molding or the like and then performing sintering, or an aggregate of crystals having a composition equivalent to the target glass composition.

Next, the glass raw material lump 12 is floated above the forming surface 10a by blowing out a gas from the gas ejection holes 10b. That is, the glass raw material lump 12 is held in a state of not being in contact with the forming surface 10a. In this state, the glass raw material lump 12 is irradiated with laser light from a laser light irradiation device 13. Accordingly, the glass raw material lump 12 is heated and melted to undergo vitrification it to obtain a molten glass. Thereafter, the molten glass is cooled to obtain a glass material. At this time, the molten glass and the glass material are cooled until the temperature is at least equal to or lower than the softening point. In the step of heating and melting the glass raw material lump 12 and the step of cooling the molten glass and the glass material until the temperature is at least equal to or lower than the softening point, it is preferable to at least continue ejecting the gas to prevent contact between the forming surface 10a and the glass raw material lump 12, the molten glass, and further the glass material. Note that, the glass raw material lump 12 may be floated above the forming surface 10a by using the magnetic force generated by applying a magnetic field. In addition to the method of irradiation with laser light, the glass raw material lump 12 may be heated and melted by radiation heating or the like.

The method for manufacturing the glass material according to the present invention is not limited to a method other than the above container-free floating method. For example, the glass material according to the present invention may be manufactured by crucible melting. In the case of crucible melting, a large amount of raw material powder can be melted at once, making it easier to obtain a large glass material. The large glass material can be suitably used for high power laser applications or the like.

### EXAMPLES

Hereinafter, the present invention will be described based on Examples, but the present invention is not limited to these Examples.

Tables 1 to 5 show Examples 1 to 24 of the present invention and Comparative Examples 25 to 27.

**[Table 1]**

| | | Example | | | | | |
|---|---|---|---|---|---|---|---|
| | | 1 | 2 | 3 | 4 | 5 | 6 |
| Glass composition (mol%) | Tb₂O₃ | 31 | 32 | 33 | 34 | 35 | 30 |
| | B₂O₃ | 0 | 68 | 0 | 21 | 31 | 11 |
| | Al₂O₃ | 69 | 0 | 0 | 19 | 9 | 59 |
| | SiO₂ | 0 | 0 | 67 | 16 | 19 | 0 |
| | P₂O₅ | 0 | 0 | 0 | 10 | 6 | 0 |
| CeO₂ addition amount (mol%) | | 0.1 | 0.2 | 0.01 | 0.03 | 0.1 | 0.05 |
| FeO+Fe₂O₃ content (ppm) | | 0.5 | 2 | 3 | 0.8 | 1 | 0.2 |
| CeO₂/(FeO+Fe₂O₃) | | 2000 | 1000 | 33 | 375 | 1000 | 2500 |
| B₂O₃+Al₂O₃+SiO₂+P₂O₅ | | 69 | 68 | 67 | 66 | 65 | 70 |
| Verdet constant at 1064 nm (min/Oe·cm) | | 0.080 | 0.130 | 0.152 | 0.113 | 0.133 | 0.076 |
| Transmittance at 1064 nm (%) | | 87.2 | 85.3 | 84.4 | 86.5 | 85.3 | 87.3 |
| Tb³⁺ proportion (%) | | 98 | 98 | 99 | 99 | 98 | 99 |
| 50 W laser beam diameter to 10 W laser beam diameter (%) | | 92 | 91 | 90 | 91 | 91 | 93 |
| Beam diameter change rate (%) | | 8 | 9 | 10 | 9 | 9 | 7 |

**[Table 2]**

| | | Example | | | | | |
|---|---|---|---|---|---|---|---|
| | | 7 | 8 | 9 | 10 | 11 | 12 |
| Glass composition (mol%) | Tb₂O₃ | 41 | 50 | 36 | 26 | 21 | 16 |
| | B₂O₃ | 15 | 33 | 16 | 0 | 42 | 19 |
| | Al₂O₃ | 17 | 13 | 18 | 23 | 17 | 14 |
| | SiO₂ | 21 | 0 | 30 | 49 | 10 | 51 |
| | P₂O₅ | 6 | 4 | 0 | 2 | 10 | 0 |
| CeO₂ addition amount (mol%) | | 0.07 | 0.3 | 0.01 | 0.005 | 0.1 | 0.2 |
| FeO+Fe₂O₃ content (ppm) | | 4 | 5 | 0.1 | 0.5 | 0.9 | 0.2 |
| CeO₂/(FeO+Fe₂O₃) | | 175 | 600 | 1000 | 100 | 1111 | 10000 |
| B₂O₃+Al₂O₃+SiO₂+P₂O₅ | | 59 | 50 | 64 | 74 | 79 | 84 |
| Verdet constant at 1064 nm (min/Oe·cm) | | 0.154 | 0.188 | 0.143 | 0.083 | 0.028 | 0.010 |
| Transmittance at 1064 nm (%) | | 87.5 | 83.2 | 86.4 | 87.3 | 87.6 | 88.1 |
| Tb³⁺ proportion (%) | | 99 | 97 | 99 | 99 | 99 | 99 |
| 50 W laser beam diameter to 10 W laser beam diameter (%) | | 89 | 85 | 90 | 92 | 93 | 94 |
| Beam diameter change rate (%) | | 11 | 15 | 10 | 8 | 7 | 6 |

**[Table 3]**

| | | Example | | | | | |
|---|---|---|---|---|---|---|---|
| | | 13 | 14 | 15 | 16 | 17 | 18 |
| Glass composition (mol%) | Tb₂O₃ | 51 | 52 | 52 | 52 | 51 | 53 |
| | B₂O₃ | 35 | 17 | 29 | 0 | 4 | 33 |
| | Al₂O₃ | 4 | 2 | 19 | 13 | 16 | 10 |
| | SiO₂ | 10 | 29 | 0 | 35 | 29 | 4 |
| | P₂O₅ | 0 | 0 | 0 | 0 | 0 | 0 |
| CeO₂ addition amount (mol%) | | 0.1 | 0.2 | 0.01 | 0.03 | 0.1 | 0.05 |
| FeO+Fe₂O₃ content (ppm) | | 0.7 | 3 | 0.1 | 0.1 | 1 | 5 |
| CeO₂/(FeO+Fe₂O₃) | | 1429 | 667 | 1000 | 3000 | 1000 | 100 |
| B₂O₃+Al₂O₃+SiO₂+P₂O₅ | | 49 | 48 | 48 | 48 | 49 | 47 |
| Verdet constant at 1064 nm (min/Oe·cm) | | 0.206 | 0.214 | 0.197 | 0.208 | 0.201 | 0.206 |
| Transmittance at 1064 nm (%) | | 84.2 | 83.9 | 84.6 | 84.3 | 84.5 | 84.2 |
| Tb³⁺ proportion (%) | | 99 | 98 | 99 | 98 | 99 | 98 |
| 50 W laser beam diameter to 10 W laser beam diameter (%) | | 85 | 86 | 88 | 85 | 86 | 85 |
| Beam diameter change rate (%) | | 15 | 14 | 12 | 15 | 14 | 15 |

**[Table 4]**

| | | Example | | | | | |
|---|---|---|---|---|---|---|---|
| | | 19 | 20 | 21 | 22 | 23 | 24 |
| Glass composition (mol%) | Tb₂O₃ | 55 | 57 | 58 | 59 | 61 | 63 |
| | B₂O₃ | 25 | 28 | 24 | 34 | 27 | 26 |
| | Al₂O₃ | 10 | 3 | 10 | 5 | 6 | 5 |
| | SiO₂ | 0 | 3 | 1 | 0 | 0 | 0 |
| | P₂O₅ | 10 | 9 | 7 | 2 | 6 | 6 |
| CeO₂ addition amount (mol%) | | 0.07 | 0.3 | 0.01 | 0.005 | 0.1 | 0.2 |
| FeO+Fe₂O₃ content (ppm) | | 0.7 | 3 | 0.1 | 0.1 | 1 | 5 |
| CeO₂/(FeO+Fe₂O₃) | | 1000 | 1000 | 1000 | 500 | 1000 | 400 |
| B₂O₃+Al₂O₃+SiO₂+P₂O₅ | | 45 | 43 | 42 | 41 | 39 | 37 |
| Verdet constant at 1064 nm (min/Oe·cm) | | 0.197 | 0.209 | 0.209 | 0.222 | 0.220 | 0.226 |
| Transmittance at 1064 nm (%) | | 84.5 | 83.3 | 83.2 | 82.7 | 82.8 | 82.3 |
| Tb³⁺ proportion (%) | | 97 | 98 | 99 | 99 | 98 | 98 |
| 50 W laser beam diameter to 10 W laser beam diameter (%) | | 88 | 87 | 86 | 85 | 85 | 83 |
| Beam diameter change rate (%) | | 12 | 13 | 14 | 15 | 15 | 17 |

**[Table 5]**

| | | Comparative Example | | |
|---|---|---|---|---|
| | | 25 | 26 | 27 |
| Glass composition (mol%) | Tb₂O₃ | 59 | 59 | 40 |
| | B₂O₃ | 34 | 34 | 27 |
| | Al₂O₃ | 5 | 5 | 19 |
| | SiO₂ | 0 | 0 | 10 |
| | P₂O₅ | 2 | 2 | 4 |
| CeO₂ addition amount (mol%) | | 0 | 5 | 0 |
| FeO+Fe₂O₃ content (ppm) | | 0.7 | 3 | 5 |
| CeO₂/(FeO+Fe₂O₃) | | 0 | 16667 | 0 |
| B₂O₃+Al₂O₃+SiO₂+P₂O₅ | | 41 | 41 | 60 |
| Verdet constant at 1064 nm (min/Oe·cm) | | 0.222 | 0.223 | 0.150 |
| Transmittance at 1064 nm (%) | | 81.2 | 81.3 | 81.5 |
| Tb³⁺ proportion (%) | | 95 | 93 | 97 |
| 50 W laser beam diameter to 10 W laser beam diameter (%) | | 64 | 67 | 70 |
| Beam diameter change rate (%) | | 36 | 33 | 30 |

Each sample was prepared as follows. First, raw materials were mixed to have the glass compositions shown in Tables 1 to 5, and subjected to press molding. The press-molded raw material was subjected to sintering at 800°C for 5 hours to prepare a glass raw material lump.

Next, the glass raw material lump was coarsely crushed in a mortar into small pieces of 1 g. Next, a glass material (about 9 mm in diameter) was prepared by a container-free floating method using the small piece of the glass raw material lump and an apparatus similar to that shown in Fig. 1. A CO₂ laser oscillator of 100 W was used as a heat source. In addition, nitrogen gas was used as the gas for floating the glass raw material lump in the air, and the supply flow rate was 1 L/min to 30 L/min. The obtained glass material was annealed at 770°C for 6 hours in a 4%-H₂/N₂ atmosphere, and then the following measurement was performed. The results are shown in Tables 1 to 5.

The Verdet constant was measured using a rotating analyzer method. Specifically, the obtained glass material was polished to a thickness of 1 mm, the Faraday rotation angle was measured in a wavelength range of 500 nm to 1100 nm in a 10 kOe magnetic field, and the Verdet constant at a wavelength of 1064 nm was calculated.

The light transmittance was measured using a spectrophotometer (V-670, manufactured by JASCO Corporation). Specifically, the obtained glass material was polished to a thickness of 1 mm, and the light transmittance at a wavelength of 1064 nm was read from a light transmittance curve. Note that, the light transmittance is an external transmittance including reflection.

The proportion of Tb³⁺ to the total Tb was measured using X-ray absorption fine structure analysis (XAFS). Specifically, a spectrum of an X-ray absorption edge structure region (XANES) was obtained, and the proportion (mol%) of Tb³⁺ to the total Tb was calculated based on the shift amount of the peak position of each Tb ion.

The beam diameter change rate was measured as follows. First, laser light with a wavelength of 1064 nm and an output of 10 W and 50 W was incident, with a beam diameter of 1 mm, on a glass sample processed to a thickness of 3 mm, and the size of the beam diameter at a position 300 mm from the sample was measured. The beam diameter was set to a value of 1/e². Next, using the beam diameter at an output of 10 mW as a reference, the beam diameter change rate when the output was increased to 50 W was calculated. Note that, even in the absence of a sample, the beam diameter change was observed due to the thermal lens effect of a collimating lens, so that the beam diameter change rate was determined by subtracting the beam diameter change amount in the absence of a sample from the measured beam diameter change rate.

As shown in Tables 1 to 5, in the glass materials of Examples 1 to 24, the absolute value of Verdet constant was 0.01 min/Oe·cm to 0.226 min/Oe·cm at a wavelength of 1064 nm. In addition, the light transmittance was 80% or more at a wavelength of 1064 nm in all cases, indicating a good light transmittance. The beam diameter change rate was 17% or less.

On the other hand, in the glass materials of Comparative Examples 25 to 27, the beam diameter change rate was 30% or more.

### INDUSTRIAL APPLICABILITY

The glass material according to the present invention can be suitably used for magnetic optical elements (for example, a Faraday rotator) that constitute a magnetic device such as an optical isolator, an optical circulator, and a magnetic sensor.

## Claims

1. A glass material comprising, in mol%, from 10% to 90% of Tb₂O₃, from 1% to 89% of B₂O₃+Al₂O₃+SiO₂+P₂O₅, and from 0.01 ppm to 100 ppm of FeO+Fe₂O₃, and further comprising, as an external proportion, from 0.001% to 1% of CeO₂.

2. The glass material according to claim 1, comprising, in mol%, from 0% to 70% of B₂O₃, from 0% to 70% of Al₂O₃, from 0% to 70% of SiO₂, and from 0% to 10% of P₂O₅.

3. The glass material according to claim 2, comprising, in mol%, more than 12% to 40% of B₂O₃, from 1% to 20% of Al₂O₃, from 0% to 40% of SiO₂, and from 0% to 5% of P₂O₅.

4. The glass material according to any one of claims 1 to 3, comprising, in mol%, less than 5% of Pr₂O₃, and less than 5% of Dy₂O₃.

5. The glass material according to any one of claims 1 to 4, wherein a proportion of Tb³⁺ to total Tb is 55% or more in mol%.

6. The glass material according to any one of claims 1 to 5, wherein a light transmittance is 70% or more at a wavelength of 1064 nm.

7. A magnetic optical element comprising: the glass material according to any one of claims 1 to 6.
